# EUROPEAN PATENT APPLICATION

(11) **EP 4 811 147 A1**
(43) Date of publication of application: **23.09.2026**
(21) Application number: 26166427.0
(22) Date of filing: 20.03.2026
(51) Int. Cl.: G06F 13/40, H04L 25/03

(54) **ACTIVE COPPER-BASED INTERCONNECT SYSTEM FOR COMPUTING CIRCUITS**

(30) Priority: 21.03.2025 US 202519086579
(71) Applicant: Mellanox Technologies, Ltd., 2069200 Yokneam (IL)
(72) Inventor: ATIAS, Boaz, 2069200 Yokneam (IL); BOIS, Karl, 2069200 Yokneam (IL); WELLS, Ryan, 2069200 Yokneam (IL); MENTOVICH, Elad, 2069200 Yokneam (IL); KEDAR, Daniel, 2069200 Yokneam (IL); IVRY, Raanan, 2069200 Yokneam (IL)
(74) Representative: Mathys & Squire

(57) **Abstract**

A system includes a first circuit board including one or more first computing circuits. The system further includes an interconnect device coupled with the one or more first computing circuits. The interconnect device includes a linear re-driver configured to receive an electrical input signal from at least one of the one or more first computing circuits. The linear re-driver is further configured to boost the electrical input signal to form a boosted electrical signal. The linear re-driver is further configured to output the boosted electrical signal. The interconnect device is configured to provide the boosted electrical signal to one or more second computing circuits of a second circuit board over one or more wired connections. The boost to the electrical input signal compensates for a known loss associated with the one or more wired connections.

## Description

### TECHNICAL FIELD

At least one embodiment pertains to interconnect systems, such as electrical signal interconnect systems in a datacenter. For example, at least one embodiment pertains to an active copper-based interconnect system.

### BACKGROUND

Computing circuits communicate with one another via interconnect systems. For example, an electrical signal can be sent from one computing circuit to another computing circuit via an interconnect system.

### SUMMARY

The invention is defined by the claims. In order to illustrate the invention, aspects and embodiments which may or may not fall within the scope of the claims are described herein.

A system includes a first circuit board including one or more first computing circuits. The system further includes an interconnect device coupled with the one or more first computing circuits. The interconnect device includes a linear re-driver configured to receive an electrical input signal from at least one of the one or more first computing circuits. The linear re-driver is further configured to boost the electrical input signal to form a boosted electrical signal. The linear re-driver is further configured to output the boosted electrical signal. The interconnect device is configured to provide the boosted electrical signal to one or more second computing circuits of a second circuit board over one or more wired connections. The boost to the electrical input signal compensates for a known loss associated with the one or more wired connections.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

Various embodiments in accordance with the present disclosure will be described with reference to the drawings, in which:
**FIGS. 1A-B** are schematic illustrations of example system architectures, in accordance with at least some embodiments.
**FIG. 2** is a schematic illustration of an example circuit board, in accordance with at least some embodiments.
**FIG. 3** is a perspective view of an example interconnect device, in accordance with at least some embodiments.
**FIG. 4** is a plot diagram illustrating signal amplitude with respect to signal frequency, in accordance with at least some embodiments.
**FIG. 5** is a flow diagram of an example method of an interconnect device operations, and providing an electrical signal, in accordance with at least some embodiments.
**FIGS. 6A-6B** illustrate a network architecture, in accordance with at least some embodiments.
**FIG. 7** illustrates a distributed system, in accordance with at least some embodiments.
**FIG.8** illustrates an exemplary data center, in accordance with at least some embodiments.
**FIG. 9** illustrates a computer system, in accordance with at least some embodiments.
**FIG. 10** is a block diagram that schematically illustrates a computing system, in accordance with at least some embodiments.
**FIG. 11** illustrates an example computing environment, in accordance with at least one embodiment.
**FIGS. 12A-B** illustrate views of a transceiver module operatively coupled to a network adapter, in accordance with at least some embodiments.
**FIG. 13** depicts exemplary scenarios for use of a transceiver, in accordance with at least some embodiments.

### DETAILED DESCRIPTION

High performance computing circuits often include powerful graphical processing units (GPUs), central processing units (CPUs), data processing units (DPUs), and other components, etc. Such high-performance computing circuits are regularly implemented on a printed circuit board (PCB) having many other circuit components. GPUs, CPUs, DPUs, QPU, PPU, and/or other components may be integrated into a computing server (a "server"). In at least one embodiment, an artificial intelligence (AI) data center infrastructure platform is provided. Examples of an AI data center infrastructure platform are Nvidia^{®} DGX^{™} SuperPOD^{™} and DGX^{™} Foundry. In at least one embodiment, an AI data center infrastructure platform provides accelerated infrastructure and/or scalable performance tailored for AI such as machine learning (ML) and other high-performance computing (HPC) loads. In datacenters, servers and/or other datacenter components are interconnected using physical interconnections. Copper cables can be used for short connections and optical cables (e.g., optical fibers, etc.) are often used for longer connections. Optical-based connections use transceivers which convert signals in the electrical domain into signals in the optical domain and vice versa. Such transceivers may have high power consumption, high thermal output, and high cost. Additionally, optical transceivers are large and take up valuable space. Copper-based connections do not use transceivers and therefore have lower power consumption, lower thermal output, and lower cost. Moreover, copper-based connections take up less space than optical transceivers, allowing for a higher density of interconnections. However, traditional copper-based interconnections are not suitable for long distance connections because of the losses in the copper cable and associated connections, etc.

While the scale up of bandwidth (BW) of copper cannot be maintained with correct BW density, another solution may be desirable that would allow further scaling of copper or active copper links. The present disclosure may leverage the performance and advantages of active copper, to provide a new design of a unified board configuration that can accommodate both copper-based and optical transceivers. This design allows for flexibility in replacing some chips while maintaining the same PCB design, addressing bandwidth and density issues. This would allow a flexible density control of a board using a new active copper architecture. Provided herein is an architecture that would allow to replace the quad small form-factor pluggable (QSFP) form factors devices or at least some of the QSFP devices with active copper architecture, allowing a design flexibility of that area. In at least one embodiment, provided herein is a design that allows for substantially the same PCB design to work for the next bandwidth benchmark. Embodiments of the present disclosure address the above-described issues by providing a flexible design that can handle different transceiver types and bandwidths.

Copper-based transceivers as described herein may offer significant advantages, including lower latency and power consumption compared to optical transceivers. Copper-based transceivers may not require a re-timer, which is beneficial for system performance. The losses on copper traces are significant, making it difficult to achieve reasonable performance beyond short distances. However, copper is more cost-effective and lighter than optical solutions, making copper a preferred choice for short-range connections within data centers. However, for longer distances, optics are often used due to the limitations of copper. In some embodiments, a copper-based transceiver uses a linear re-driver as an amplifier that reshapes and/or boosts signals to maintain performance over copper connections. The linear re-driver may overcome signal degradation and/or ensure reliable data transmission over copper connections. in some embodiments, the linear re-driver receives a signal, reshapes the signal, and/or boosts the signal to overcome obstacles in the connection and/or to ensure a clear signal at the receiving end.

The modular design of the board allows customers to choose between using the mid-board active copper (MBAC) solution described herein or transceivers based on their needs (e.g., to suit their network configuration, choosing the appropriate mix of MBAC and transceivers to optimize performance and cost, etc.), with the system compensating for any losses. In some embodiments, the system compensates for any losses, ensuring the chosen configuration (MBAC or transceivers) works efficiently. In some embodiments, users can decide whether to use the inbuilt solution (e.g., MBAC) or a traditional solution on a connection-by-connection basis. This interchangeability allows for flexibility in implementation. In some embodiments, the components could be in different locations depending on the implementation. In some embodiments, the present disclosure provides an innovation of anticipating the board's response at high frequencies and compensating for the response. This capability may be crucial for ensuring the board's performance in high-frequency environments. in some embodiments, the board runs between two Nvidia services and allows users to choose between implementing the MBAC solution or a transceiver solution. This flexibility may be a feature of the board's design. In some embodiments, populating the linear re-driver on the host board may significantly increase the system's density. This increase in density may support higher data rates and more connections. This approach may reduce latency by minimizing the distance the signal needs to travel. Reduced latency may support high-performance applications. In some embodiments, the frequency response of the linear re-driver is matched to the service's requirements. This matching may ensure the signal is processed correctly and maintains its integrity. The selected device closely matches the optimal frequency response needed for the MBAC solution. This close match may enable solution's performance and reliability.

Aspects of the present disclosure address the above-described problem, deficiencies described above, and other challenges by providing a system for utilizing long-distance copper-based interconnections. In some embodiments, an interconnect system as described herein can be used for connecting related servers by switchboards. In some embodiments, the interconnect system is suitable for connecting a network interface card (NIC) to a switch, a switch to a switch (e.g., an a GPU connected), and/or differential active copper components. A linear re-driver included in an interconnect system as described herein receives an input electrical signal and boosts (e.g., amplifies, conditions, etc.) the signal. The boosted signal is output along a copper-based interconnection and is received by a connected device. Boosting and/or conditioning of the signal is performed to overcome known losses in the copper-based interconnection. In some embodiments, the internal losses at the sender and at the receiver, as well as the losses in the connection between the sender and receiver are modeled and known. Accordingly, the signal can be boosted (e.g., amplified) in a targeted manner that counteracts the known signal losses. In addition, the linear re-driver may provide signal conditioning (e.g., analog signal conditioning, etc.) to the signal to counteract the frequency dependent conductive and dielectric losses in the signaling path. In some embodiments, the linear re-driver is integrated with a cable (e.g., such as in a cable end). In some embodiments, the linear re-driver is included in a module coupled directly on a circuit board (e.g., on a server board, switch board, etc.). Because the copper-based interconnection (including the linear re-driver) is smaller than the optical transceivers traditionally used, the density of interconnects on a circuit board can be greatly increased without sacrificing functionality or cost by using the interconnect system described in embodiments herein. In some embodiments, a circuit board uses a combination of copper-based interconnects and traditional optical transceivers (e.g., ports that receive traditional optical transceivers), dependent upon the design specification of the end-user. The combination of copper-based interconnects and other transceivers (e.g., such as traditional optical transceivers, etc.) can be customized to meet a given specification in embodiments.

Advantages of the present disclosure include, but are not limited to, for example, increased density of interconnect devices on a circuit board without sacrificing cost and/or functionality. Because an active copper-based interconnect system disclosed herein may be smaller than conventional interconnect systems currently used, a greater number of copper-based interconnect devices can be included on a circuit board in some embodiments than has traditionally been possible. Accordingly, a greater number of electrical signals can be sent and/or received by computing circuit(s) on the circuit board. Additionally, the interconnect system described herein can effectively increase the distance over which electrical signals can be sent via copper-based cable(s) without sacrificing signal integrity. Accordingly, costlier options of communicating electrical signals (such as by optical fiber, etc.) can be replaced, providing a cost savings when implemented in environments such as a datacenter. An interconnect system as described herein may also offer power savings when compared to other methods of communicating signals, such as by optical fiber. Further, an interconnect system as described herein may simplify the electrical connections on a PCB, reducing density on the PCB and reducing cost. Moreover, the interconnect system described herein is at least partially "customizable" in some embodiments, meaning that the configuration of the interconnect system can be adapted to meet a given specification such as by including a combination of active copper-based interconnect device(s) and/or traditional interconnect devices on a circuit board.

A linear active low-power and low-latency solution using MBAC module may reduce the power and thermal issues of a re-timed copper solution or an optical solution, while almost eliminating their added end-to-end latency for AI and HPC applications. Enabling 224G copper solutions vs. conventional optical modules (e.g., TRCVs) may also provide cost reduction for the solution. In addition, the supply chain availability of optical modules needed for the rapidly expending AI datacenter may not be possible. As such, using MBAC solutions, intra-rack cabling (e.g., up to 3m)can be implemented using copper and/or analog re-drivers, instead of optical modules.

Some embodiments of the present disclosure are directed to a multi-chip module (MCM) with a centrally positioned main die and a plurality of peripherally positioned MCM sockets configured to mechanically receive and electrically connect mezzanine packages, which may include co-packaged optics (CPO) packages and/or co-packaged copper (CPC) packages. Each mezzanine package may include a package substrate including a connector portion that is configured to engage the MCM socket and a main portion extending beyond the periphery of the MCM substrate. The main portion of the mezzanine package may be configured to receive optical devices and/or integrated circuits, such as via mezzanine sockets, to allow connections to be made between the optical devices and/or integrated circuits/RF copper cable connectors and/or the main die of the MCM. Due to the extension of the mezzanine package beyond the periphery of the MCM substrate, the physical size of the MCM substrate may remain small to reduce cost and avoid the previously discussed production challenges, while allowing connections to a number of optical devices and integrated circuits via the mezzanine packages, which occupy the relatively inexpensive space around the periphery of the MCM substrate. As used herein, the terms "co-packaged optic" (or "CPO") and "co-packaged copper" (or "CPC") may refer to an advanced heterogeneous integration of either optics and silicon or copper and silicon, in which either integration may be implemented on a single packaged substrate. The CPO may utilize pluggable optical modules that include an optical engine (OE) to convert optical signals to electrical signals and electrical signals to optical signals. The CPO may further be comprised of an optical component on a photonics die and an electrical component on an electrical die.

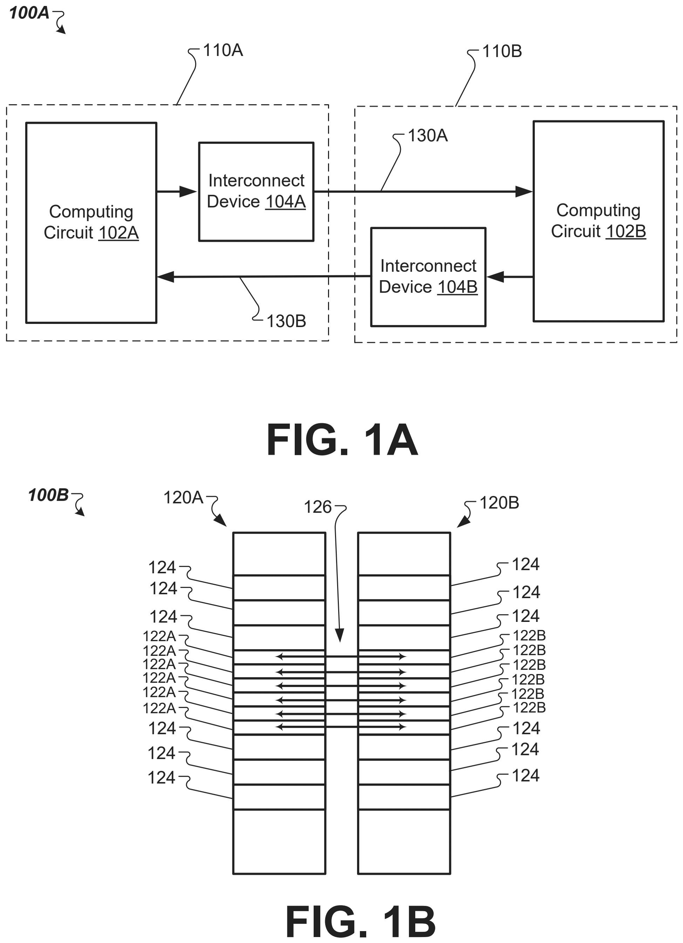

**FIG. 1A** is a schematic illustration of an example system architecture 100A, in accordance with at least some embodiments. In some embodiments, computing circuits 102A and 102B are communicatively coupled with one another via active copper-based interconnect systems as described herein. Computing circuit 102A may be disposed on a circuit board 110A. Circuit board 110A may be a circuit board for a first server, for a first switch, etc., such as in a datacenter. Computing circuit 102B may be disposed on a circuit board 110B. Circuit board 110B may a circuit board for a second server, a second switch, etc. Circuit boards 110A and/or 110B may each be a PCB having multiple components disposed thereon. Such components may include computing component(s), power delivery component(s), and/or communication component(s) (e.g., communication port(s), interconnect device(s), etc.). In some embodiments, circuit board 110B may be remote to circuit board 110A. For example, circuit board 110A and circuit board 110B may be spatially separated. Circuit boards 110A and 110B may be located in a same datacenter room, in separate datacenter rooms or in separate datacenter regions, for example. In an example, circuit board 110A is in a first blade chassis on a rack in a datacenter, and circuit board 110B is in a second blade chassis on the server rack or another rack (e.g., in a same or different row) in the datacenter. In some embodiments, circuit board 110A may be separated from circuit board 110B by more than three meters, etc. In some embodiments, circuit board 110A may be separated from circuit board 110B by more than five meters, or by more than eight meters, etc.

Computing circuits 102A and 102B may include one or more graphics processing units (GPUs), central processing units (CPUs), data processing units (DPUs), and/or other computing components. Computing circuits 102A and 102B may communicate with one another via one or more interconnect devices. In some embodiments, electrical signals are sent from computing circuit 102A to computing circuit 102B via interconnect device 104A and cable connection 130A. In some embodiments, electrical signals are sent from computing circuit 102B to computing circuit 102A via interconnect device 104B and cable connection 130B. In some embodiments, electrical signals can be sent and/or received bi-directionally using the same cable connection and interconnect device. The electrical signals may be sent at high speed. In some embodiments, electrical signals are communicated in excess of 100 gigabytes per second per lane. For example, 100 gigabytes of data may be communicated from one of the computing circuits to the other every second per communication lane. A single cable connection (e.g., such as cable connection 130A) may constitute a lane. Accordingly, 100 gigabytes of data per second may be communicated from the computing circuit 102A to the computing circuit 102B via the interconnect device 104A and/or the cable connection 130A.

In some embodiments, the interconnect device 104A is an active module for performing signal boosting and/or signal conditioning. Signal boosting and/or signal conditioning may include signal amplification, signal attenuation, signal modulation, signal filtering, and/or signal modifying in embodiments. In some embodiments, interconnect device 104A receives an electrical input signal from computing circuit 102A. Interconnect device 104A may boost and/or condition the received electrical input signal and may output the boosted signal to computing circuit 102B via the cable connection 130A. In some embodiments, interconnect device 104A includes a linear re-driver to boost the input signal and form a boosted signal. The interconnect device 104A may be configured to operate at high speed. For example, the interconnect device 104A may be configured to operate in excess of 100 gigabytes per second per lane. In some embodiments, the interconnect device 104A is configured to operate between approximately 100 gigabytes per second per lane and approximately 200 gigabytes per second per lane. The interconnect device 104A may be configured to operate in excess of 200 gigabytes per second per lane in some embodiments. In some embodiments, the interconnect device 104A is configured to operate between approximately 200 gigabytes per second per lane and approximately 300 gigabytes per second per lane. In some embodiments, the interconnect device 104A is configured to operate at approximately 224 gigabytes per second per lane.

The linear re-driver may be used to improve the quality of high-speed data signals. The linear re-driver may perform signal conditioning, such as equalization. Equalization may include compensating for signal degradation (e.g., such as loss of high-frequency components) caused by transmission of the signal over long distances (e.g., via cables or traces). In some embodiments, the linear re-driver performs de-emphasis and/or pre-emphasis which may include adjusting the signal amplitude at specific frequencies to counteract inter-symbol interference. The linear re-driver may perform signal amplification. In some embodiments, the linear re-driver amplifies a signal (e.g., a signal that is expected to be weakened) to ensure the signal remains within a voltage threshold level for proper detection at a receiver after being weakened. In some embodiments, the linear re-driver boosts an input signal in a manner that maintains the signal's original characteristics (e.g., amplitude and/or shape) at a recipient without introducing significant distortion and/or noise. The linear re-driver may not re-clock the signal and may allow a signal to pass through with minimal delay in some embodiments.

The boost provided to the signal (e.g., by the linear re-driver) may overcome known losses in the cable connection 130A. In some embodiments, the boosted electrical signal degrades during transit from the interconnect device 104A to the computing circuit 102B (e.g., via the cable connection 130A). Additionally, the electrical signal may degrade between computing circuit 102A and interconnect device 104A. Such signal degradation may be compensated for by the interconnect device based on knowledge of an amount of loss and/or distortion between computing circuit 102A and interconnect device 104A and/or an amount of loss and/or distortion between interconnect device 104A and computing circuit 102B. The losses in the cable connection 130A may be known based on distance/length of the cable connection 130A, the loss(es) of the traces on the PCB at both ends (e.g., at PCB 110A and/or at PCB 110B). The losses may be known based on cable type and/or cable connector type. The losses may be known based on interconnection type, such as by port type. For example, a first type of port may have a first loss and a second type of port may have a second loss. The loss(es) may be predetermined such as by testing and/or by modeling.

In some embodiments, the cable connection 130A includes a copper-based cable for conveying electrical signals. As used herein, the term "copper-based" may include embodiments where an interconnect cable has a copper core, such as for conveying electrical signals. In some embodiments, a copper-based cable is a coaxial cable having a copper portion for conveying an electrical signal. In some embodiments, the interconnect device 104A may perform signal conditioning on the input signal and may output the conditioned signal to the computing circuit 102B via the cable connection 130A. The signal may degrade during transit from the interconnect device 104A to the computing circuit 102B. The degraded electrical signal received by the computing circuit 102B corresponds to the input signal received by the interconnect device 104A from the computing circuit 102A and/or to the original signal output by computing circuit 120A. For example, the signal received by the computing circuit 102B via the cable connection 130A may be substantially similar to the signal provided from the computing circuit 102A to the interconnect device 104A. The interconnect device 104A may condition and/or boost the signal such that the signal received by the computing circuit 102B is substantially similar to the signal provided by the computing circuit 102A.

Interconnect device 104B may perform operations similar to those described for interconnect device 104A to provide electrical signals from computing circuit 102B to computing circuit 102A via cable connection 130B.

Electrical signals may be provided from computing circuit 102A to computing circuit 102B as single-ended signals and/or as differential pair signals. In the case of a single-ended signal, one interconnect device provides boosting and/or conditioning to the signal. In the case of a differential pair signal, two interconnect devices may provide boosting and/or conditioning to the signal. One interconnect device may provide boosting and/or conditioning to a first signal of the differential pair, and a second interconnect device may provide boosting and/or conditioning to a second signal of the differential pair. As shown in FIG. 1, the electrical signal conveyed by cable connection 130A from interconnect device 104A to computing circuit 102B may form at least part of a differential pair signal. Similarly, the electrical signal conveyed by cable connection 130B from interconnect device 104B to computing circuit 102A may form at least part of a differential pair signal.

FIG. 1B is a schematic illustration of an example system architecture 100B, in accordance with at least some embodiments. In some embodiments, a rack 120A is disposed next to rack 120B in a datacenter. Each of racks 120A and 120B may hold multiple computing trays, such as servers 124 and/or switch trays 122A,B. The servers 124 and/or the switch trays 122A,B may be interconnected by copper-based connections 126. In some embodiments, interconnect device(s) coupled to and/or integrated with the switch trays 122A,B boost and/or amplify electrical signals that are to travel between the switch trays 122A,B. For example, an interconnect device coupled with a switch tray 122A may receive an electrical signal (e.g., from a server 124 in rack 120A). The interconnect device may boost and/or amplify the signal (e.g., via a linear re-driver) before providing the boosted and/or amplified signal to a corresponding switch tray 122B via a copper-based connection 126. The signal may be received by the switch tray 122B, and the switch tray 122B may provide the received signal to a server 124 (e.g., a server 124 in rack 120B). In some embodiments, multiple copper-based connections 126 communicatively couple the switch trays 122A with the switch trays 122B. Multiple copper-based connections 126 may couple each of the switch trays 122A with each of the corresponding switch trays 122B. The switch trays 122A,B may include an interconnect device as described herein for each of the copper-based connections 126.

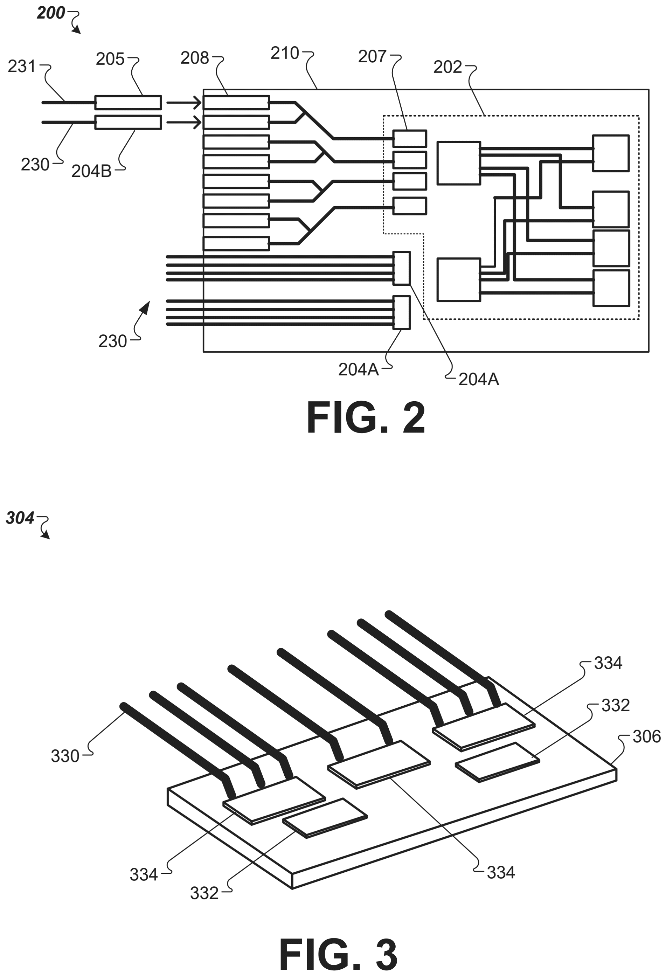

FIG. 2 is a schematic illustration of an example circuit board 200, in accordance with at least some embodiments. In some embodiments, circuit board 200 forms at least part of a switch tray. In some embodiments, a computing circuit 202 is disposed on PCB 210. Computing circuit 202 may include one or more GPUs, CPUs, DPUs, and/or other computing units. PCB 210 may form at least part of a server or switch, such as a server or switch in a datacenter. In some embodiments, ports 208 are included on PCB 210 to facilitate communication of computing circuit 202 with one or more other computing circuit(s) disposed on one or more other PCBs. One or more switches 207 may be configured to direct electrical signals from computing circuit 202 to the ports 208, such as by electrical traces on PCB 210. In some embodiments, a port 208 forms a receptacle to receive a transceiver and/or a cable end. For example, and in some embodiments, a port 208 may be configured to receive an optical transceiver 205. Optical transceiver 205 may be pluggable transceivers configured to receive an electrical input signal (e.g., from computing circuit 202), generate an optical signal indicative of the electrical input signal, and provide the optical signal to one or more other computing circuits via an optical fiber 231.

In some embodiments, PCB 210 includes a plurality of ports 208. Each of the ports 208 may service two or more GPUs of computing circuit 202. In some embodiments, PCB 210 includes up to 18 ports 208 to service connections for up to 36 GPUs. Transceivers 205 may be plugged into each of the ports 208 to send and/or receive electrical signals (e.g., optical signals indicative of electrical signals) for the GPUs. In some embodiments, each of the transceivers 205 may be flexibly interchanged (e.g., swapped) with an interconnect device 204B as described herein below. To scale out the computing circuit 202 to include more GPUs, more ports 208 may be needed to convey more electrical signals across more communication lanes. In some embodiments, the number of communication lanes is to be doubled. In some embodiments, the computing circuit 202 may include up to 72 GPUs. The PCB 210 may include up to 36 ports 208 to service connections for the GPUs. There may not be sufficient space on the PCB 210 for the ports 208 to service connections for the increased number of GPUs. In some embodiments, the PCB 210 includes interconnect devices 204A to service connections for the GPUs. The interconnect devices 204A may be smaller than the ports 208 and associated transceivers 205 and/or interconnect devices 204B, allowing for a greater density of devices on the PCB 210.

In some embodiments, a port 208 may be configured to receive an interconnect device 204B. Interconnect device 204B may be an optical transceiver or an electrical interconnect device similar to interconnect devices 104A and 104B described above with respect to FIG. 1. In some embodiments, interconnect device 204B is a pluggable transceiver. In some embodiments, interconnect device 204B forms a cable end configured to couple with the receptacle of port 208. Accordingly, in some embodiments a port 208 may receive either an optical transceiver or an electrical interconnect device configured to plug into a same type of port that may be used for optical transceivers. The interconnect device 204B receives an electrical input signal (e.g., from computing circuit 202). The interconnect device 204B may perform active functions to boost and/or condition the received electrical input signal. In some embodiments, the interconnect device 204B includes a linear re-driver to boost the received input signal. The linear re-driver may be integrated into a cable end of the interconnect device 204B in some embodiments. The interconnect device 204B may provide the boosted electrical signal to another computing circuit (e.g., of another PCB) via an interconnect cable 230. The boost and/or conditioning provided by the linear re-driver may compensate for known signal behavior (e.g., losses) in the interconnect cable 230 and/or traces and/or electrical components on PCB 210 and/or a PCB of a recipient. In some embodiments, the interconnect cable 230 is a copper-based communication cable as described herein. In some embodiments, each of the ports 208 may be configured to receive an optical transceiver 205 and an interconnect device 204B at different times.

Electrical signals from the computing circuit 202 may be communicated to a remote computing circuit (e.g., of a remote circuit board) without the use of ports 208 in some embodiments. In some embodiments, interconnect devices 204A may be coupled directly on the PCB 210. In some embodiments, the interconnect devices 204A are disposed approximately mid-board on the PCB 210. Alternatively, the interconnect devices 204A may be disposed near the periphery of the PCB 210. In some embodiments, interconnect devices 204A are each an MBAC solution. The PCB 210 may include a port to receive a wire bundle electrically coupling to at least one of the interconnect devices 204A. In some embodiments, an interconnect device 204A is coupled with a port on the PCB 210 and a connector couples to the port to convey electrical signals to and/or from the interconnect device 204A. The interconnect devices 204A may communicate electrical signals to the remote computing circuit via interconnect cables 230. The interconnect devices 204A may be active modules with a linear re-driver integrated therein that may receive electrical input signal(s) from the computing circuit 202 and may perform signal boosting and/or signal conditioning for the input signal. Interconnect devices 204A may provide output signals to computing circuit(s) on other circuit board(s) via interconnect cable(s) 230. In some embodiments, an interconnect device 204A includes a linear re-driver to perform the signal boosting and/or signal conditioning, similar to interconnect device 204B described herein above. In some embodiments, the boosting and/or conditioning of the input signal may compensate for known signal behavior (e.g., signal loss) in the interconnect cable(s) 230. In some embodiments, interconnect devices 204A each include at least one connection configured to receive electrical signals from one or more remote computing circuits. For example, and in some embodiments, an interconnect device 204A may include a receiver to receive signals from a computing circuit of another circuit board via one of the interconnect cables 230. The interconnect device 204A may provide the received signal to the computing circuit 202. In some embodiments, an interconnect device 204A may be a transceiver capable of sending and receiving electrical signals for the computing circuit 202.

A first portion of the interconnection capability of the PCB 210 may be provided by ports 208 and a second portion of the interconnection capability of the PCB 210 may be provided by active modules on the PCB 210 itself (e.g., interconnect devices 204A) in some embodiments. In some embodiments, the interconnection capability of the PCB 210 is solely provided by ports 208. In some embodiments, the interconnection capability of the PCB 210 is solely provided by active modules on the PCB 210 itself (e.g., interconnect devices 204A). The PCB 210 may be at least partially customizable by the amount and/or location of ports 208 in tandem with inclusion of one or more active interconnect modules. In embodiments where a PCB is to connect with traditional optical transceiver(s) 205, one or more ports 208 may be included on the PCB. Interconnect devices 204A, along with associated copper-based cable connections, may provide a remaining portion of the interconnection capability of the PCB. Inclusion of ports 208 and interconnect devices 204A on the PCB 210 may provide a balance of interconnection capability, circuit board density, and/or cost factors.

FIG. 3 is a perspective view of an example interconnect device 304, in accordance with at least some embodiments. The interconnect device 304 may form a paddle card that is configured to be coupled with a host card, such as a host PCB. Interconnect device 304 may be coupled on a PCB in embodiments. Pads on the bottom of the body 306 may electrically couple with traces of the PCB so that signals can be conveyed to and/or from a computing circuit on the PCB. In some embodiments, the computing circuit on the PCB provides an electrical input signal to the interconnect device 304 (e.g., via one or more conductive traces in the PCB and/or the pads on the bottom of the body 306). The electrical input signal may be provided to a linear re-driver 332 of the interconnect device 304. The linear re-driver 332 may boost and/or condition the electrical input signal to form a boosted electrical signal. The boost and/or conditioning provided to the electrical input signal by the linear re-driver 332 may compensate for known signal behavior in a coupled interconnect cable, such as losses in the interconnect cable.

The boosted and/or conditioned electrical signal may be provided from a linear re-driver 332 to a bus 334. Multiple interconnections 330 may be coupled to each bus 334. Each of the interconnections 330 may be coupled with a copper-based interconnect cable for conveying an electrical signal from interconnect device 304 to one or more remote computing circuits. In some embodiments, each of the interconnections 330 represents a lane (e.g., a communication lane). The interconnect device 304 may be configured to receive electrical signals from one or more remote computing circuits. In some embodiments, signals may be received by the interconnect device 304 via at least one of the interconnections 330. The received signal may be provided to a computing circuit via an associated bus 334 (e.g., coupled with the interconnection 330) and one or more conductive traces of the interconnect device 304. The signal may be provided to electrical connections on the PCB which communicatively connect the interconnect device 304 with the computing circuit on the PCB.

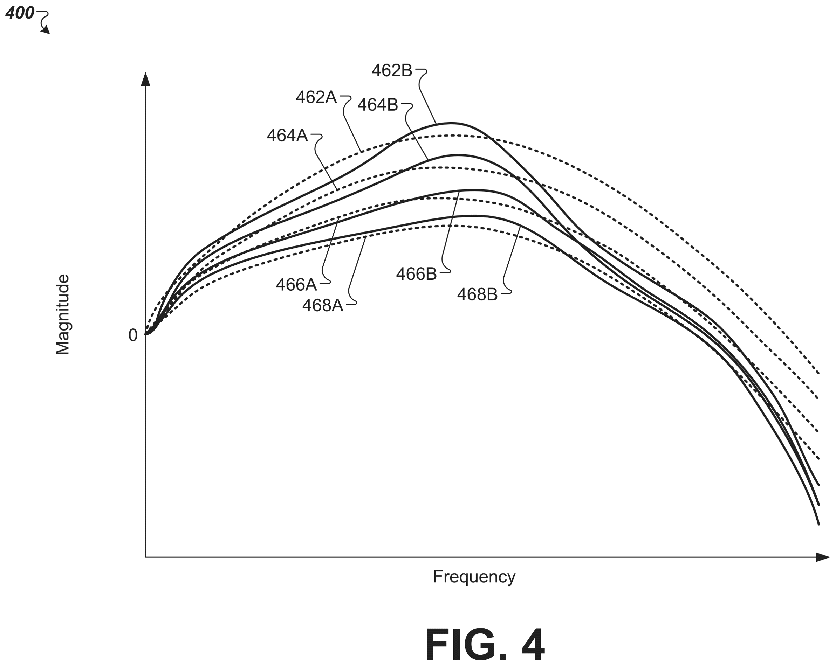

FIG. 4 is a plot diagram 400 illustrating signal amplitude with respect to signal frequency, in accordance with at least some embodiments. In some embodiments, a linear re-driver of an interconnect device as described herein may operate according to a variety of settings corresponding to known losses in an interconnect cable (e.g., a copper-based cable). The different operational settings may be selected based on known losses in the associated interconnect cable. The known losses may be based on the characteristics of the cable, such as length and/or construction, for example. The known losses may also be based on traces, electrical components, inductive losses, capacitive losses, etc. within a PCB at a sender and within a PCB at a recipient. The losses may become known after testing, and/or experimentation. In some embodiments, the linear re-driver operates to modify an input electrical signal to meet a target response (e.g., a target frequency response). The target response may differ based on the losses in the interconnect cable, in the sender PCB, in the recipient PCB, etc. Accordingly, the loss characteristics and/or frequency response may be unique to a particular pair of a location of a first server/switch, a port used from the first server/switch, a location of a second server /witch, a port used for the second server/switch, and/or cable properties. For example, in a first operational setting, a linear re-driver may modify an input signal to correspond with a target response 462A. Because of imperfections and/or operational constraints, the linear re-driver may provide an output signal corresponding to a frequency response 462B. In a second operational setting to compensate for more loss, the linear re-driver may modify an input signal to correspond with a target response 464A. The linear re-driver may output a corresponding signal having a frequency response 464B. Again, the frequency response of the output signal may not match the target response because of imperfections and/or operational constraints in the linear re-driver. However, the frequency response of the output signal may be an approximation of the target response. In similar examples to compensate for further losses, the linear re-driver may operate according to a third operational setting or fourth operation setting. The third operational setting may correspond to target response 466A and an output signal having frequency response 466B. The fourth operational setting may correspond to target response 468A and an output signal having frequency response 468B.

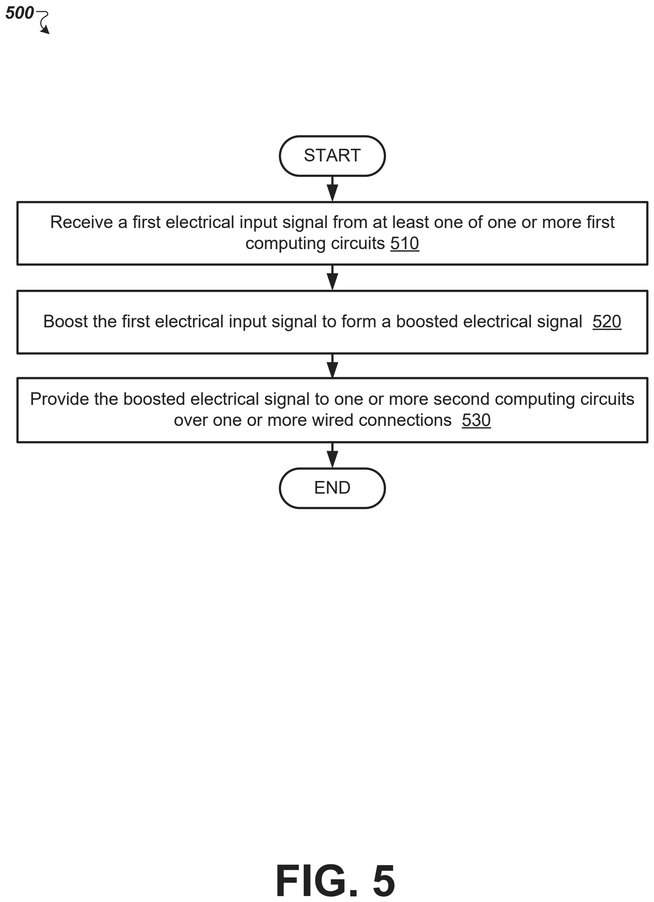

FIG. 5 is a flow diagram of an example method 500 of interconnect device operations, in accordance with at least some embodiments. Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processes can be omitted in various embodiments. Thus, not all processes are required in every embodiment. Other process flows are possible.

At block 510, an interconnect device receives a first electrical input signal from at least one of one or more first computing circuits. The interconnect device may be integrated onto a same PCB with the one or more first computing circuits. In some embodiments, the one or more first computing circuits include one or more GPUs, CPUs, DPUs, and/or other computing units, etc. The one or more first computing circuits may provide the first electrical input signal to the interconnect device via one or more electrical connections on the PCB.

At block 520, the interconnect device boosts the first electrical input signal to form a boosted electrical signal. In some embodiments, a linear re-driver of the interconnect device performs one or more signal conditioning and/or signal boosting operations on the first electrical input signal to form the boosted electrical signal. The boosting of the first electrical input signal may be based on known loss(es) in the wired connection. For example, the boosted electrical signal may overcome the known losses. In some embodiments, the boost provided to the first electrical input signal may be defined by user input indicative of the ports used for sending and/or receiving signals, identification of the sender and/or recipient of the signal, length and/or type of the wired connection, etc. In some embodiments, the boost is determined from a lookup table used to determine the conditioning to be performed based on a set of inputs (e.g., ports, server IDs, distance, etc.).

At block 530, the interconnect device provides the boosted electrical signal to one or more second computing circuits over one or more wired connections. The one or more second computing circuits may be remote to the one or more first computing circuits. In some embodiments, the one or more wired connections includes a copper-based cable (e.g., a cable having a copper core, a cable having a copper element for conveying an electrical signal, etc.). The boost and/or conditioning provided by the linear re-driver (at block 520) may compensate for known signal behavior(s) in the one or more wired connections, such as losses in the wired connections.

### Servers and Data Centers

The following figures set forth, without limitation, exemplary network server and data center based systems that can be used to implement at least one embodiment.

Datacenters may include multiple network switches in a particular topology, such as a fat tree topology, a slim fly topology, a dragonfly topology, and/or the like. The specifications and makeup of the network switches in the topology affects the overall network performance (e.g., bandwidth capability) of the datacenter. In at least one embodiment, an artificial intelligence (AI) data center infrastructure platform is provided. Examples of an AI data center infrastructure platform are Nvidia^{®} DGX^{™} SuperPOD^{™} and DGX^{™} Foundry. In at least one embodiment, an AI data center infrastructure platform provides accelerated infrastructure and/or scalable performance tailored for AI such as machine learning (ML) and other high-performance computing (HPC) loads.

### Example Data Center Environment

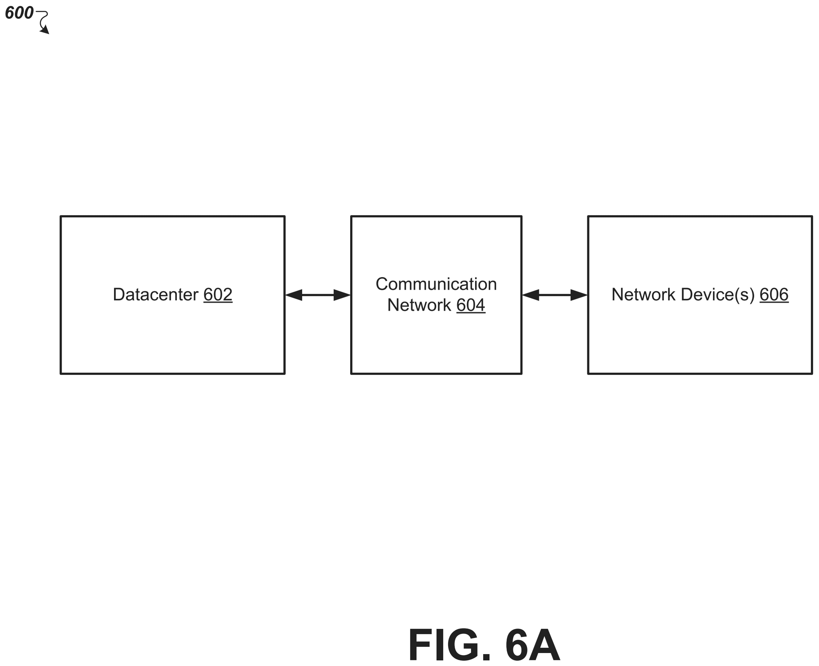

As described above, datacenters, high performance computing clusters, and/or the like are often formed of various computing components or networked devices, and communication networks formed of electrical and/or optical devices may be used to enable communication between the networked devices forming these implementations. With reference to **FIGS. 6A-6B****,** for example, a network architecture 600 may include a datacenter 602, a communication network 604, and network device(s) 606. The network architecture 600 may illustrate a general computing architecture within which more specific systems and/or subsystems may function.

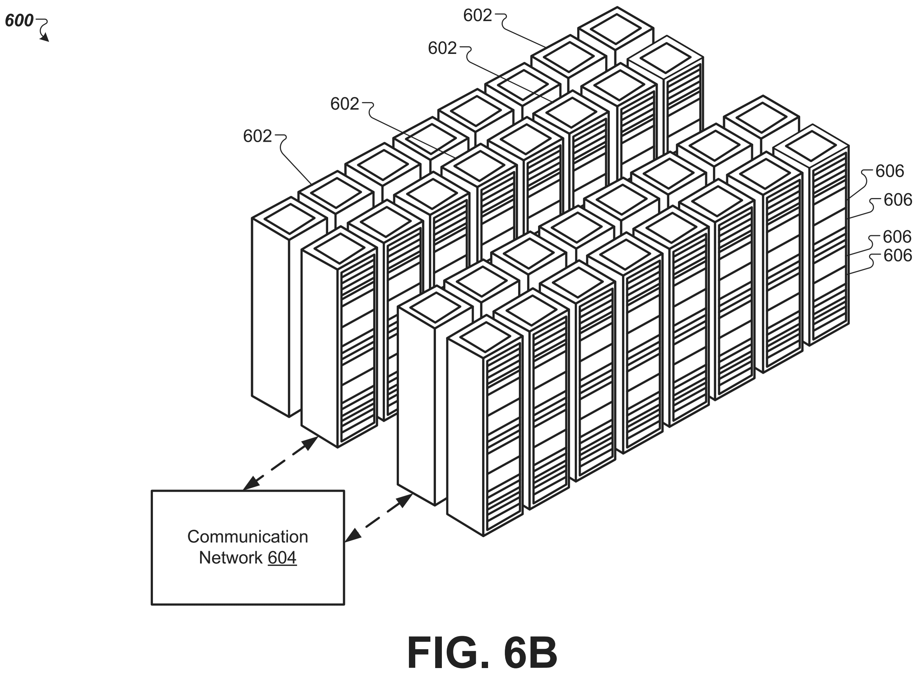

For example, the datacenter 602 may be a centralized facility designed to house computing resources and related components. The datacenter 602 may operate to support the infrastructure required for advanced computational tasks, for efficient, secure, and reliable operations. The datacenter 602 may include the building and structural components, including power supplies, cooling systems, fire suppression systems, and physical security measures that are configured to maintain optimal operating conditions and/or protect the equipment from environmental hazards and unauthorized access. An example datacenter 602 may include high-performance servers or compute nodes, often arranged in racks, such as those illustrated in FIG. 6B, and connected through high-speed networks as described herein. These servers may include processors (e.g., central processing units (CPUs), graphics processing units (GPUs), data processing units (DPUs) and/or the like), memory (e.g., RAM), and storage solutions (e.g., hard disk drives (HDDs), solid state drives (SSDs), and/or the like. The hardware configuration may be designed for parallel processing and high throughput, catering to the demands of high-performance computing (HPC) applications.

The datacenter 602 may include high-speed network equipment, such as network switches, routers, firewalls, and/or the like to facilitate fast and secure data transmission within the datacenter 602 (e.g., between the servers or compute nodes) and between external networks. The datacenter 602 may facilitate communication between servers or compute nodes through a network topology that ensures efficient data exchange, minimizes latency, and maximizes bandwidth. The network topology may dictate how various network devices, such as switches and routers, are interconnected for data flow. By implementing an effective network topology, the datacenter 602 may support high-performance computing tasks. Examples of various network topologies may include hierarchical networking topologies such as the fat tree topology, Slim Fly topology, Dragonfly topology, and/or the like.

The communication network 604 may communicably couple the datacenter 602 with network device(s) 606 and other external devices for data exchange and connectivity. Examples of the communication network 604 may include an Internet Protocol (IP) network, an Ethernet network, an InfiniBand (IB) network, a Fibre Channel network, the Internet, a cellular communication network, a wireless communication network, combinations thereof (e.g., Fibre Channel over Ethernet), variants thereof, and/or the like. The ability of the communication network 604 to incorporate multiple network types and configurations may allow the datacenter 602 to adapt to diverse application needs, from general data communication to specialized HPC tasks. As described herein, the communication network 604 may leverage various optical components to establish communication links (e.g., communicably couple) between components in the architecture 600. As such, the communication network 604 may include various optical devices, transceivers, modules, active copper-based interconnect systems, and/or the like that are configured to generate electrical and/or optical signals (e.g., provide transmitter functionality) and/or receive electrical and/or optical signals (e.g., provide receiver functionality).

The network device(s) 606 may include a variety of computing devices capable of transmitting and receiving signals over the communication network 604. The network device(s) 606 may range from personal computing devices to complex server configurations. Examples include Personal Computers (PCs), laptops, tablets, smartphones, and servers. The network device(s) 606 may facilitate user interactions with the datacenter 602, allowing for data input, retrieval, and processing from remote locations. In addition to individual computing devices, the network device(s) 606 may also include collections of servers or additional datacenters. For instance, these could be other datacenters similar to or the same as datacenter 602. Such an interconnection may allow for the formation of a distributed computing environment for improved redundancy, load balancing, and disaster recovery capabilities. By linking multiple datacenters, the network architecture 600 may leverage geographically dispersed resources, optimizing performance and ensuring high availability.

As described herein, the datacenter 602 and/or the network device(s) 606 may include storage devices and processing circuitry for executing computing tasks, such as controlling the flow of data internally and over the communication network 604. The processing circuitry may include software, hardware, or a combination thereof. For example, the processing circuitry may include a memory containing executable instructions and a processor (e.g., a microprocessor) that executes these instructions. The memory may correspond to any suitable type of memory device or collection of memory devices configured to store instructions. Non-limiting examples of suitable memory devices include Flash memory, Random Access Memory (RAM), Read Only Memory (ROM), variants thereof, combinations thereof, or similar technologies. In specific embodiments, the memory and processor may be integrated into a common device, such as a microprocessor with integrated memory. Additionally, or alternatively, the processing circuitry may comprise hardware components, such as an application-specific integrated circuit (ASIC). Other non-limiting examples of processing circuitry include Integrated Circuit (IC) chips, CPUs, GPUs, microprocessors, Field Programmable Gate Arrays (FPGAs), collections of logic gates or transistors, resistors, capacitors, inductors, and diodes. Some or all of the processing circuitry may be provided on a Printed Circuit Board (PCB) or a collection of PCBs. It should be appreciated that any appropriate type of electrical component or collection of electrical components may be suitable for inclusion in the processing circuitry.

In addition, although not explicitly shown, the present disclosure contemplates that the datacenter 602 and network device(s) 606 may include one or more communication interfaces for facilitating wired and/or wireless communication between one another and other unillustrated elements of the network architecture 600. These communication interfaces may include a variety of technologies, including but not limited to Ethernet ports, fiber optic connections, Wi-Fi^{®} transceivers, Bluetooth^{®} modules, and cellular communication modules for integration and interoperability among the various components within the network architecture 600.

Furthermore, the present disclosure contemplates that the network architecture 600 may include additional components and functionalities. For example, the network architecture may include, without limitation, additional processing units, specialized accelerators (such as Tensor Processing Units or TPUs), enhanced security modules, and redundant power supplies. The inclusion of these elements may be intended to ensure that the network architecture 600 is robust, scalable, and capable of meeting diverse operational requirements. Any variations, modifications, or adaptations of the described elements that fall within the spirit and scope of the disclosure are considered to be encompassed by the present disclosure. This includes any combinations, sub-combinations, or enhancements of the various described elements to achieve improved performance, reliability, and efficiency in the network architecture 600.

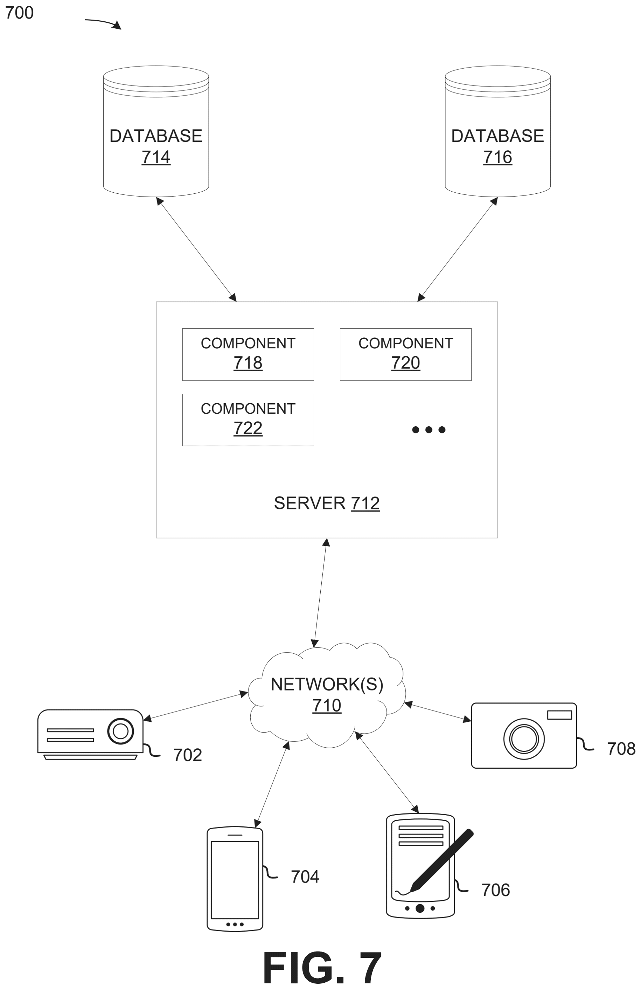

**FIG. 7** illustrates a distributed system 700, in accordance with at least some embodiments. In at least one embodiment, distributed system 700 includes one or more client computing devices 702, 704, 706, and 708, which are configured to execute and operate a client application such as a web browser, proprietary client, and/or variations thereof over one or more network(s) 710. In at least one embodiment, server 712 may be communicatively coupled with remote client computing devices 702, 704, 706, and 708 via network 710. In some embodiments, server 712 includes a PCB having one or more power connectors as described herein above. In some embodiments, server 712 receives electrical power via a power delivery system as described herein above.

In at least one embodiment, server 712 may be adapted to run one or more services or software applications such as services and applications that may manage session activity of single sign-on (SSO) access across multiple data centers. In at least one embodiment, server 712 may also provide other services or software applications can include non-virtual and virtual environments. In at least one embodiment, these services may be offered as web-based or cloud services or under a Software as a Service (SaaS) model to users of client computing devices 702, 704, 706, and/or 708. In at least one embodiment, users operating client computing devices 702, 704, 706, and/or 708 may in turn utilize one or more client applications to interact with server 712 to utilize services provided by these components.

In at least one embodiment, software components 718, 720 and 722 of system 700 are implemented on server 712. In at least one embodiment, one or more components of system 700 and/or services provided by these components may also be implemented by one or more of client computing devices 702, 704, 706, and/or 708. In at least one embodiment, users operating client computing devices may then utilize one or more client applications to use services provided by these components. In at least one embodiment, these components may be implemented in hardware, firmware, software, or combinations thereof. It should be appreciated that various different system configurations are possible, which may be different from distributed system 700. The embodiment shown in FIG. 7 is thus one example of a distributed system for implementing an embodiment system and is not intended to be limiting.

In at least one embodiment, client computing devices 702, 704, 706, and/or 708 may include various types of computing systems. In at least one embodiment, a client computing device may include portable handheld devices (e.g., an iPhone^{®}, cellular telephone, an iPad^{®}, computing tablet, a personal digital assistant (PDA)) or wearable devices (e.g., a Google Glass^{®} head mounted display), running software such as Microsoft Windows Mobile^{®}, and/or a variety of mobile operating systems such as iOS, Windows Phone, Android, BlackBerry 10, Palm OS, and/or variations thereof. In at least one embodiment, devices may support various applications such as various Internet-related apps, e-mail, short message service (SMS) applications, and may use various other communication protocols. In at least one embodiment, client computing devices may also include general purpose personal computers including, by way of example, personal computers and/or laptop computers running various versions of Microsoft Windows^{®}, Apple Macintosh^{®}, and/or Linux operating systems. In at least one embodiment, client computing devices can be workstation computers running any of a variety of commercially-available UNIX^{®} or UNIX-like operating systems, including without limitation a variety of GNU/Linux operating systems, such as Google Chrome OS. In at least one embodiment, client computing devices may also include electronic devices such as a thin-client computer, an Internet-enabled gaming system (e.g., a Microsoft Xbox gaming console with or without a Kinect^{®} gesture input device), and/or a personal messaging device, capable of communicating over network(s) 710. Although distributed system 700 in FIG. 7 is shown with four client computing devices, any number of client computing devices may be supported. Other devices, such as devices with sensors, etc., may interact with server 712.

In at least one embodiment, network(s) 710 in distributed system 700 may be any type of network that can support data communications using any of a variety of available protocols, including without limitation TCP/IP (transmission control protocol/Internet protocol), SNA (systems network architecture), IPX (Internet packet exchange), AppleTalk, and/or variations thereof. In at least one embodiment, network(s) 710 can be a local area network (LAN), networks based on Ethernet, Token-Ring, a wide-area network, Internet, a virtual network, a virtual private network (VPN), an intranet, an extranet, a public switched telephone network (PSTN), an infra-red network, a wireless network (e.g., a network operating under any of the Institute of Electrical and Electronics (IEEE) 802.11 suite of protocols, Bluetooth^{®}, and/or any other wireless protocol), and/or any combination of these and/or other networks.

In at least one embodiment, server 712 may be composed of one or more general purpose computers, specialized server computers (including, by way of example, PC (personal computer) servers, UNIX^{®} servers, mid-range servers, mainframe computers, rack-mounted servers, etc.), server farms, server clusters, or any other appropriate arrangement and/or combination. In at least one embodiment, server 712 can include one or more virtual machines running virtual operating systems, or other computing architectures involving virtualization. In at least one embodiment, one or more flexible pools of logical storage devices can be virtualized to maintain virtual storage devices for a server. In at least one embodiment, virtual networks can be controlled by server 712 using software defined networking. In at least one embodiment, server 712 may be adapted to run one or more services or software applications.

In at least one embodiment, server 712 may run any operating system, as well as any commercially available server operating system. In at least one embodiment, server 712 may also run any of a variety of additional server applications and/or mid-tier applications, including HTTP (hypertext transport protocol) servers, FTP (file transfer protocol) servers, CGI (common gateway interface) servers, JAVA^{®} servers, database servers, and/or variations thereof. In at least one embodiment, exemplary database servers include without limitation those commercially available from Oracle, Microsoft, Sybase, IBM (International Business Machines), and/or variations thereof.

In at least one embodiment, server 712 may include one or more applications to analyze and consolidate data feeds and/or event updates received from users of client computing devices 702, 704, 706, and 708. In at least one embodiment, data feeds and/or event updates may include, but are not limited to, Twitter^{®} feeds, Facebook^{®} updates or real-time updates received from one or more third party information sources and continuous data streams, which may include real-time events related to sensor data applications, financial tickers, network performance measuring tools (e.g., network monitoring and traffic management applications), clickstream analysis tools, automobile traffic monitoring, and/or variations thereof. In at least one embodiment, server 712 may also include one or more applications to display data feeds and/or real-time events via one or more display devices of client computing devices 702, 704, 706, and 708.

In at least one embodiment, distributed system 700 may also include one or more databases 714 and 716. In at least one embodiment, databases may provide a mechanism for storing information such as user interactions information, usage patterns information, adaptation rules information, and other information. In at least one embodiment, databases 714 and 716 may reside in a variety of locations. In at least one embodiment, one or more of databases 714 and 716 may reside on a non-transitory storage medium local to (and/or resident in) server 712. In at least one embodiment, databases 714 and 716 may be remote from server 712 and in communication with server 712 via a network-based or dedicated connection. In at least one embodiment, databases 714 and 716 may reside in a storage-area network (SAN). In at least one embodiment, any necessary files for performing functions attributed to server 712 may be stored locally on server 712 and/or remotely, as appropriate. In at least one embodiment, databases 714 and 716 may include relational databases, such as databases that are adapted to store, update, and retrieve data in response to SQL-formatted commands.

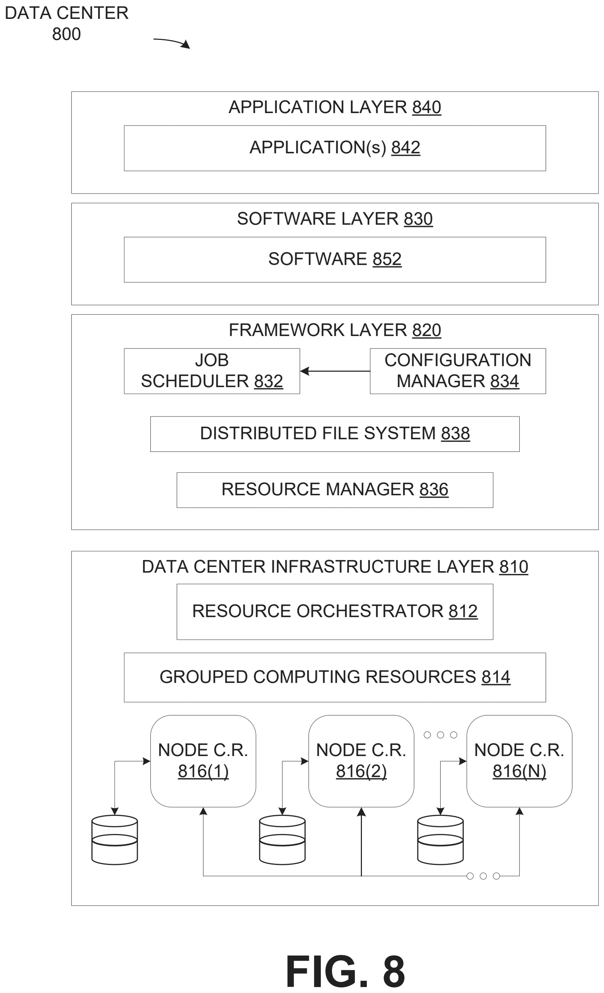

FIG. 8 illustrates an exemplary data center 800, in accordance with at least some embodiments. In at least one embodiment, data center 800 includes, without limitation, a data center infrastructure layer 810, a framework layer 820, a software layer 830 and an application layer 840.

In at least one embodiment, as shown in FIG. 8, data center infrastructure layer 810 may include a resource orchestrator 812, grouped computing resources 814, and node computing resources ("node C.R.s") 816(1)-816(N), where "N" represents any whole, positive integer. In at least one embodiment, node C.R.s 816(1)-816(N) may include, but are not limited to, any number of central processing units ("CPUs") or other processors (including accelerators, field programmable gate arrays ("FPGAs"), graphics processors, etc.), memory devices (e.g., dynamic read-only memory), storage devices (e.g., solid state or disk drives), network input/output ("NW I/O") devices, network switches, virtual machines ("VMs"), power modules, and cooling modules, etc. In at least one embodiment, one or more node C.R.s from among node C.R.s 816(1)-816(N) may be a server having one or more of above-mentioned computing resources.

In at least one embodiment, grouped computing resources 814 may include separate groupings of node C.R.s housed within one or more racks (not shown), or many racks housed in data centers at various geographical locations (also not shown). Separate groupings of node C.R.s within grouped computing resources 814 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 812 may configure or otherwise control one or more node C.R.s 816(1)-816(N) and/or grouped computing resources 814. In at least one embodiment, resource orchestrator 812 may include a software design infrastructure ("SDI") management entity for data center 800. In at least one embodiment, resource orchestrator 812 may include hardware, software or some combination thereof.

In at least one embodiment, as shown in FIG. 8, framework layer 820 includes, without limitation, a job scheduler 832, a configuration manager 834, a resource manager 836 and a distributed file system 838. In at least one embodiment, framework layer 820 may include a framework to support software 852 of software layer 830 and/or one or more application(s) 842 of application layer 840. In at least one embodiment, software 852 or application(s) 842 may respectively include web-based service software or applications, such as those provided by Amazon Web Services, Google Cloud and Microsoft Azure. In at least one embodiment, framework layer 820 may be, but is not limited to, a type of free and open-source software web application framework such as Apache SparkTM (hereinafter "Spark") that may utilize distributed file system 838 for large-scale data processing (e.g., "big data"). In at least one embodiment, job scheduler 832 may include a Spark driver to facilitate scheduling of workloads supported by various layers of data center 800. In at least one embodiment, configuration manager 834 may be capable of configuring different layers such as software layer 830 and framework layer 820, including Spark and distributed file system 838 for supporting large-scale data processing. In at least one embodiment, resource manager 836 may be capable of managing clustered or grouped computing resources mapped to or allocated for support of distributed file system 838 and job scheduler 832. In at least one embodiment, clustered or grouped computing resources may include grouped computing resource 814 at data center infrastructure layer 810. In at least one embodiment, resource manager 836 may coordinate with resource orchestrator 812 to manage these mapped or allocated computing resources.

In at least one embodiment, software 852 included in software layer 830 may include software used by at least portions of node C.R.s 816(1)-816(N), grouped computing resources 814, and/or distributed file system 838 of framework layer 820. One or more types of software may include, but are not limited to, Internet web page search software, e-mail virus scan software, database software, and streaming video content software.

In at least one embodiment, application(s) 842 included in application layer 840 may include one or more types of applications used by at least portions of node C.R.s 816(1)-816(N), grouped computing resources 814, and/or distributed file system 838 of framework layer 820. In at least one or more types of applications may include, without limitation, CUDA applications, 5G network applications, artificial intelligence application, data center applications, and/or variations thereof.

In at least one embodiment, any of configuration manager 834, resource manager 836, and resource orchestrator 812 may implement any number and type of self-modifying actions based on any amount and type of data acquired in any technically feasible fashion. In at least one embodiment, self-modifying actions may relieve a data center operator of data center 800 from making possibly bad configuration decisions and possibly avoiding underutilized and/or poor performing portions of a data center.

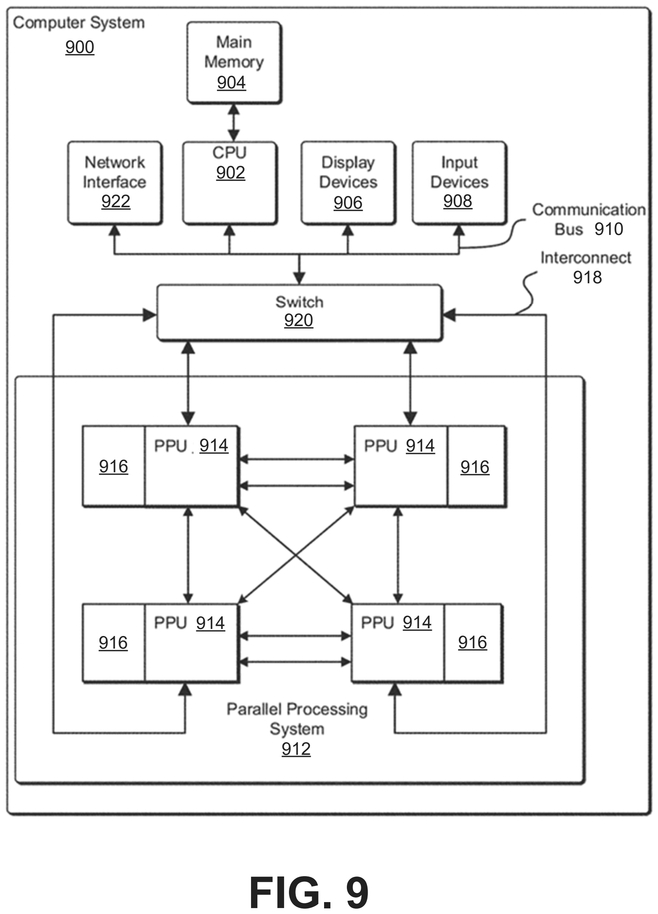

FIG. 9 illustrates a computer system 900, according to at least one embodiment. In at least one embodiment, computer system 900 is configured to implement various processes and methods described throughout this disclosure.

In at least one embodiment, computer system 900 comprises, without limitation, at least one central processing unit ("CPU") 902 that is connected to a communication bus 910 implemented using any suitable protocol, such as PCI ("Peripheral Component Interconnect"), peripheral component interconnect express ("PCI-Express"), AGP ("Accelerated Graphics Port"), HyperTransport, or any other bus or point-to-point communication protocol(s). In at least one embodiment, computer system 900 includes, without limitation, a main memory 904 and control logic (e.g., implemented as hardware, software, or a combination thereof) and data are stored in main memory 904 which may take form of random access memory ("RAM"). In at least one embodiment, a network interface subsystem ("network interface") 922 provides an interface to other computing devices and networks for receiving data from and transmitting data to other systems from computer system 900.

In at least one embodiment, computer system 900, in at least one embodiment, includes, without limitation, input devices 908, parallel processing system 912, and display devices 906 which can be implemented using a conventional cathode ray tube ("CRT"), liquid crystal display ("LCD"), light emitting diode ("LED"), plasma display, or other suitable display technologies. In at least one embodiment, user input is received from input devices 908 such as keyboard, mouse, touchpad, microphone, and more. In at least one embodiment, each of foregoing modules can be situated on a single semiconductor platform to form a processing system.

In at least one embodiment, computer programs in form of machine-readable executable code or computer control logic algorithms are stored in main memory 904 and/or secondary storage. Computer programs, if executed by one or more processors, enable system 900 to perform various functions in accordance with at least one embodiment. memory 904, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous figures are implemented in context of CPU 902; parallel processing system 912; an integrated circuit capable of at least a portion of capabilities of both CPU 902; parallel processing system 912; a chipset (e.g., a group of integrated circuits designed to work and sold as a unit for performing related functions, etc.); and any suitable combination of integrated circuit(s).

In at least one embodiment, architecture and/or functionality of various previous figures are implemented in context of a general computer system, a circuit board system, a game console system dedicated for entertainment purposes, an application-specific system, and more. In at least one embodiment, computer system 900 may take form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic.

In at least one embodiment, parallel processing system 912 includes, without limitation, a plurality of parallel processing units ("PPUs") 914 and associated memories 916. In at least one embodiment, PPUs 914 are connected to a host processor or other peripheral devices via an interconnect 918 and a switch 920 or multiplexer. In at least one embodiment, parallel processing system 912 distributes computational tasks across PPUs 914 which can be parallelizable-for example, as part of distribution of computational tasks across multiple graphics processing unit ("GPU") thread blocks. In at least one embodiment, memory is shared and accessible (e.g., for read and/or write access) across some or all of PPUs 914, although such shared memory may incur performance penalties relative to use of local memory and registers resident to a PPU 914. In at least one embodiment, operation of PPUs 914 is synchronized through use of a command such as_syncthreads( ), wherein all threads in a block (e.g., executed across multiple PPUs 914) to reach a certain point of execution of code before proceeding.

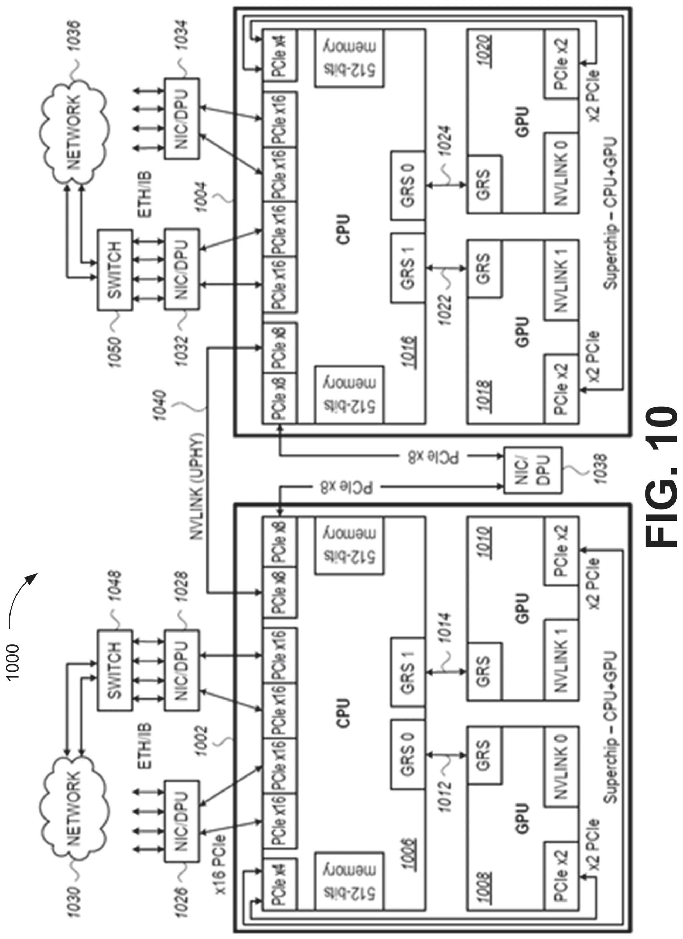

FIG. 10 is a block diagram that schematically illustrates a computing system 1000, e.g., a data center or a High-Performance Computing (HPC) cluster, in accordance with an embodiment that is described herein. System 1000 comprises a plurality of subsystems, e.g. multiple processing devices coupled to each other, multiple network devices, and multiple networks, according to at least one embodiment. Computing system 1000 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 1000 and to one or more external networks 1030, 1036. In the present example, system 1000 comprises a packet switch 1048 that connects NIC/DPU 1028 to network 1030, and a packet switch 1050 that connects NIC/DPU 1032 to network 1036.

The coupling of processing devices through NVLink allows for seamless data exchange and parallel processing, enhancing overall computational performance. The processing devices are connected to multiple networks through one or more network interface controllers (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 1000 can include one or more CPUs and one or more GPUs.

FIG. 10 also demonstrates an example architecture of a multi-GPU architecture. As illustrated in the figure, computing system 1000 includes a processing device 1002 with a multi-GPU architecture. In particular, processing device 1002 may be a system-on-chip and includes multiple subsystems such as a CPU 1006, a GPU 1008, and a GPU 1010. CPU 1006 can be coupled to GPU 1008 via a die-to-die (D2D) or chip-to-chip (C2C) interconnect 1012, such as a Ground-Referenced Signaling interconnect (GRS interconnect). CPU 1006 can be coupled to GPU 1010 via a D2D or C2C interconnect 1014. CPU 1006 can also couple to GPU 1008 and GPU 1010 via PCIe interconnects.

CPU 1006 can be coupled to one or more NICs or DPUs, which are coupled to one or more networks. For example, as illustrated in FIG. 10, CPU 1006 is coupled to a first NIC/DPU 1026, which is coupled to a network 1030. CPU 1006 is also coupled to a second NIC/DPU 1028, which is coupled to network 1030 via switch 1048. NIC/DPU 1026 and NIC/DPU 1028 can be coupled to network 1030 over Ethernet (ETH), NVLINK or InfiniBand (IB) connections, for example.

Computing system 1000 also includes a processing device 1004 with a multi-GPU architecture. In particular, processing device 1004 includes multiple subsystems including a CPU 1016, a GPU 1018, and a GPU 1020. CPU 1016 can be coupled to GPU 1018 via an D2D or C2C interconnect 1022. CPU 1016 can be coupled to GPU 1020 via a D2D or C2C interconnect 1024. CPU 1016 can also couple to GPU 1018 and GPU 1020 via PCIe interconnects. CPU 1016 can be coupled to one or more NICs or DPUs, which are coupled to one or more networks. For example, as illustrated in FIG. 10, CPU 1016 is coupled to a first NIC/DPU 1032, which is coupled to a network 1036. CPU 1016 is also coupled to a second NIC/DPU 1034, which is coupled to network 1036 via switch 1050. NIC/DPU 1032 and NIC/DPU 1034 can be coupled to network 1036 over Ethernet (ETH), NVLINK or InfiniBand (IB) connections.

In at least one embodiment, processing device 1002 and processing device 1004 can communication with each other via a NIC/DPU 1038, such as over PCIe interconnects. Processing device 1002 and processing device 1004 can also communicate with each other over a high-bandwidth communication interconnects 1040, such as an NVLink interconnect or other high-speed interconnects. The packet switches in Fig. 3 may comprise, for example, Nvidia Quantum-2 switches. The NICs/DPUs in the figure may comprise, for example, Nvidia Bluefield DPUs.

In some embodiments, any of the network devices of system 1000 (e.g., any of NICs/DPUs 1026, 1028, 1032, 1034, and 1038, and/or any of the switches 1048 and 1050, etc.) may use interconnect device(s) as described herein to communicate via copper-based connections. For example, any of the network devices may send and/or receive electrical signals via a copper-based connection using an interconnect device that boosts and/or amplifies a received signal to overcome losses in the copper-based connection.

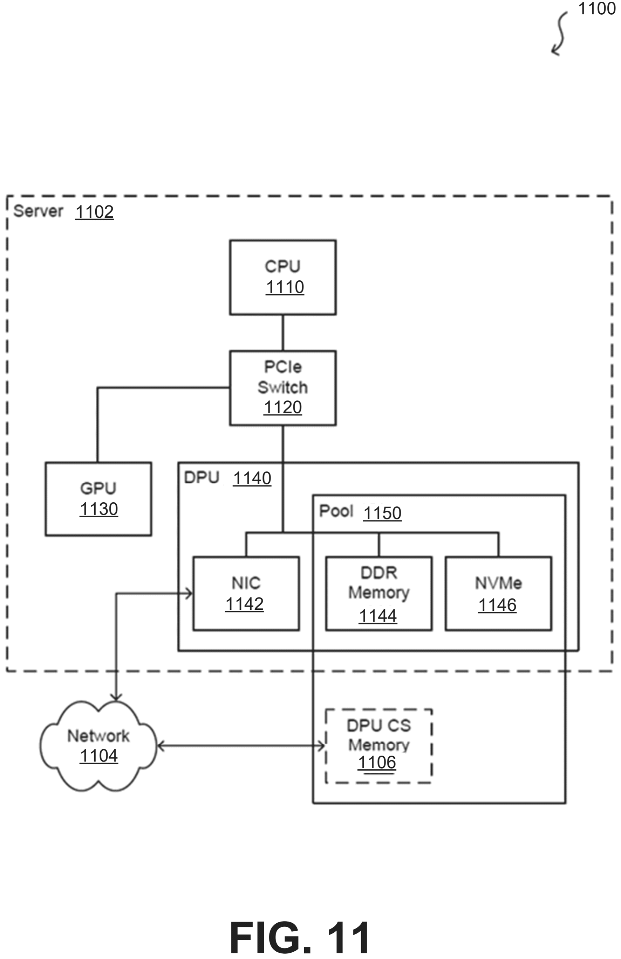

**FIG. 11** illustrates an example computing environment 1100, in accordance with at least one embodiment. FIG. 11 illustrates an example computing environment 1100 in which forward pass offloading to available memory can be performed, in accordance with at least one embodiment. It should be appreciated that embodiments of the present disclosure may also be used with reference to alternative environments and that specific discussion of components may be provided by way of non-limiting example and may include equivalents. Moreover, various features have been removed for clarity and conciseness. Additionally, systems and methods may be used with a variety of different architectures. The example computing environment 1100 may include a server 1102 which may be used to perform HPC workloads, such as AI training or machine learning model training. In an embodiment, the server 1102 may be an application instance or a compute node. The server 1102 may include a CPU 1110 associated with a switch 1120, such as a peripheral component interconnect express (PCIe) switch, which may control at least some data transmission over communication paths interconnecting various components. In an embodiment, the CPU 1110 may include a root complex processor.

The PCIe switch 1120 may also be associated with a GPU 1130 and a DPU 1140, and may transmit data between at least some of the CPU 1110, the GPU 1130, the DPU 1140, and other components. In an embodiment, the PCIe switch 1120 may be associated with more than one GPU or more than one DPU. In another embodiment, the PCIe switch 1120 may be located within the DPU 1140. The PCIe switch 1120 may manage the transfer of at least some data between the CPU 1110, the GPU 1130, and the DPU 1140. In another embodiment, the number of GPUs associated with the PCIe switch 1120 may be equal to the number of DPUs associated with the PCIe switch 1120. In at least one embodiment, the server 1102 may include, without limitation, any number of the CPUs 1110, the PCIe switches 1120, the GPUs 1130, and/or the DPUs 1140, in any combination. For example, in at least one embodiment, server 1102 could include eight, sixteen, thirty-two, and/or more GPUs 1130. In at least one embodiment, communication paths interconnecting various components, including but not limited to the CPU 1110, the PCIe switch 1120, the GPU 1130, and the DPU 1140, in FIG. 11 may be implemented using any suitable protocols, such as peripheral component interconnect (PCI) based protocols (e.g., PCIe), or other bus or point-to-point communication interfaces and/or protocol(s), such as NV-Link high-speed interconnect, or interconnect protocols.

The DPU 1140 may include a network interface controller (NIC) 1142, a DDR memory 1144, and a non-volatile memory express (NVMe) device 1146. The NIC 1142 may be able to interface with a network 1104, which may also interface with additional NVMe devices available to the DPU 1140, such as over fabric. In an embodiment, the DPU 1140 may not include the NVMe device 1146. In another embodiment, the NVMe device 1146 may be located on the server 1102 and not on the DPU 1140. In yet another embodiment, the computing environment 1100 may include more than one of the NVMe device 1146, such as a first NVMe device in the DPU 1140 and a second first NVMe device on the server 1102 an associated directly with the PCIe switch 1120. In an embodiment, the DPU 1140 may not include the DDR memory 1144 and may include a computational storage services (CSS) in place of, or in addition to, the DDR memory 1144. For example, computing environment 1100 may include DPU computational storage (CS) memory 1106 available to the DPU 1140 as part of the CSS. The network 1104 may be able to interface with the DPU CS memory 1106 through the NIC 1142, according to any suitable interface protocol, such as remote direct memory access (RDMA) over Ethernet, InfiniBand, Fiber Channel, etc..

The total memory of the computing environment 1100 available for data storage may be expanded through the use of the DPU 1140 on nodes of the system. The DPU 1140 may have access to a pool 1150 of memory already available to the server 1102, such as double data rate (DDR) memory, on-board NVMe devices, NVMe devices over fabric, and CS. The pool 1150 of memory may include at least one of the DDR memory 1144, NVMe 1146, and the DPU CS memory 1106. The DPU 1140 may also be able to access the available memory of other DPUs as part of the pool 1150, and other DPUs may be able to access the available memory of DPU 1140, such as the pool 1150. This available memory can be accessed and utilized for data storage, without the addition of compute resources, such as compute nodes, which would be required using other solutions. The available pool 1150 accessible to the DPU 1140 may be provisioned for the server 1102 to expand the total memory available for data storage, such as to reduce the data storage load on the CPU 1110 or the GPU 1130, which can instead increase the utilization of their memory for processing. For example, during training of an AI, the model states, residual states, activation functions, and checkpoints can be stored, or offloaded, on the pool 1150 accessible to the DPU 1140.

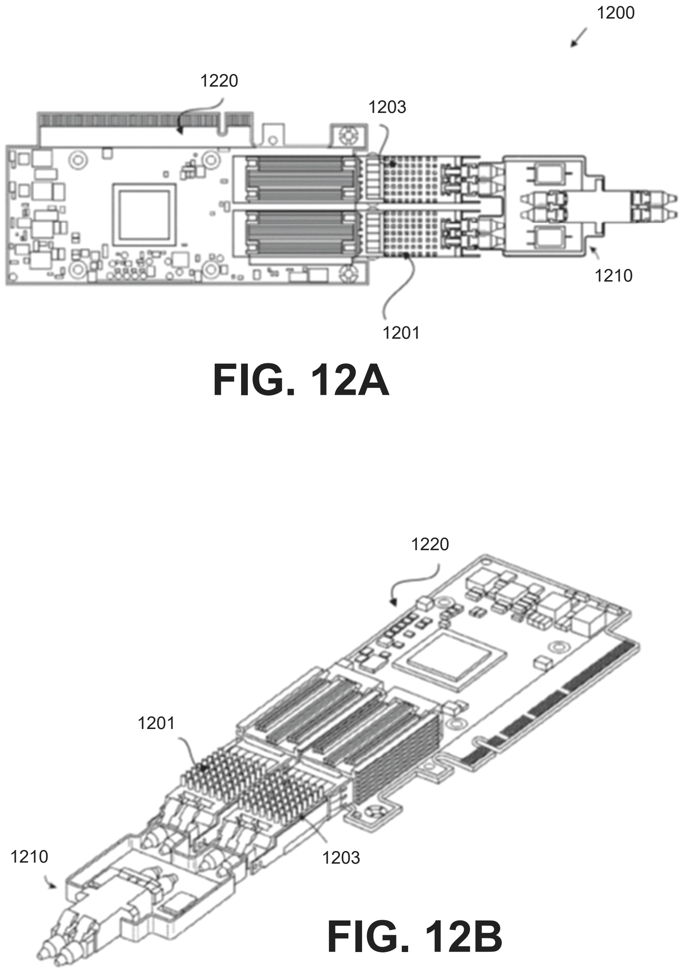

**FIGS. 12A** and **12B** illustrate a top view and a perspective view, respectively, of a transceiver module operatively coupled to a network adapter, in the present example a Network Interface Controller (NIC) 1200, in accordance with an embodiment of the disclosure. As shown in FIGS. 12A and 12B, the transceiver module may include a first optical module 1201, a second optical module 1203, an adapter 1210, and a dual-port NIC 1220 of a server. Both the first optical module 1201 and the second optical module 1203 may be dual-fiber transceivers that are configured for duplex communication that allows the source (e.g., server) to communicate with the target (e.g., leaf switch) in both directions. The adapter 1210 may be a ganged physical component configured to link the first optical module 1201 and the second optical module 1203 for the purpose of transmitting and receiving data to and from the leaf switch.

In some embodiments, the adapter 1210 may be configured to operate in two configurations, such as a first configuration and a second configuration. In one aspect, the first configuration may be a default configuration of operation, where the first optical module 1201 may be operationally active. The second configuration may be a contingent configuration that is implemented when the first optical module 1201 operationally fails. When such a failure is detected, the second optical module 1203, which is otherwise operationally inactive or idle, may be engaged become operationally active and handle all network traffic that was initially handled by the first optical module 1201.

In some embodiments, the transceiver module 1200 may be configured to operate in a leaf-spine architecture. A leaf-spine architecture is a data center network topology that may include two switching layers-a spine layer and a leaf layer. The leaf layer may include access switches (leaf switches) that aggregate traffic from servers and connect directly into the spine or network core. Spine switches interconnect all leaf switches in a full-mesh topology between access switches in the leaf layer and the servers from which the access switches aggregate traffic. As such, in one embodiment, to ensure reliable operation of downlinks, the transceiver module 1200 may be configured to operate between the server and the leaf layer. In particular, as shown in FIGS. 12A and 12B, the adapter 1210 may be operatively coupled to the first optical module 1201 and the second optical module 1203, while the first optical module 1201 and the second optical module 1203 may be operatively coupled to a dual-port NIC 1220 of a server.

In embodiments, NIC 1200 may comprise one or more processing circuits, as detailed above; the processing circuits may comprise FW, that is loaded according to the techniques described above.

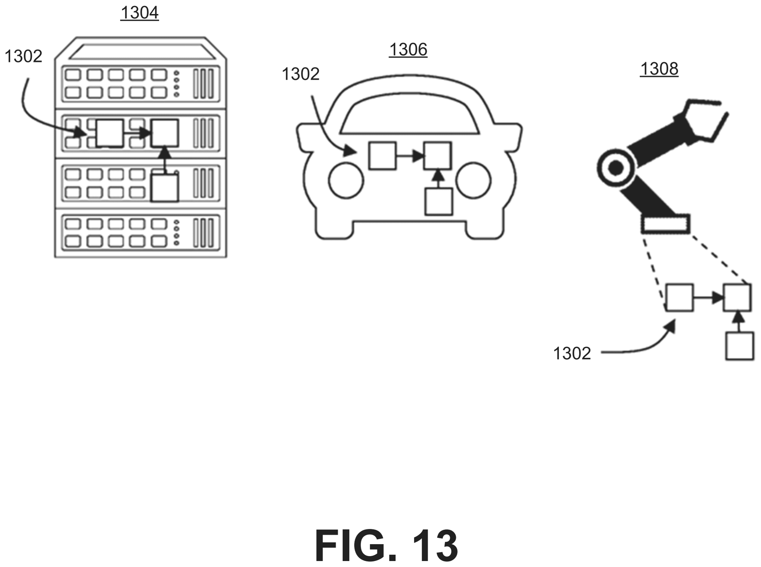

**FIG. 13** depicts exemplary scenarios for use of a transceiver 1302 (e.g., an optical transceiver) in accordance with some embodiments. A transceiver 1302 may be utilized in a computing system 1304 (e.g., in a server farm, or within a server computer system), a vehicle 1306 (e.g., a car, truck, train, or airplane), and a robot 1308 (or among robots in a factory), to name just a few examples. The transceiver 1302 may be particularly useful for high-speed communication in environments subject to high levels of electromagnetic interference (EMI).

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit the disclosure to a specific form or forms disclosed, but on the contrary, the intention is to cover all modifications, alternative constructions, and equivalents falling within the spirit and scope of the disclosure, as defined in appended claims.

Use of terms "a" and "an" and "the" and similar referents in the context of describing disclosed embodiments (especially in the context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitations of ranges of values herein are merely intended to serve as a shorthand method of referring individually to each separate value falling within the range, unless otherwise indicated herein, and each separate value is incorporated into the specification as if it were individually recited herein. In at least one embodiment, the use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but subset and corresponding set may be equal.

Conjunctive language, such as phrases of the form "at least one of A, B, and C," or "at least one of A, B and C," unless specifically stated otherwise or otherwise clearly contradicted by context, is otherwise understood with the context as used in general to present that an item, term, etc., may be either A or B or C, or any nonempty subset of the set of A and B and C. For instance, in an illustrative example of a set having three members, conjunctive phrases "at least one of A, B, and C" and "at least one of A, B and C" refer to any of the following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, the term "plurality" indicates a state of being plural (e.g., "a plurality of items" indicates multiple items). In at least one embodiment, the number of items in a plurality is at least two, but can be more when so indicated either explicitly or by context. Further, unless stated otherwise or otherwise clear from context, the phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in the form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause a computer system to perform operations described herein. In at least one embodiment, a set of non-transitory computer-readable storage media comprises multiple non-transitory computer-readable storage media and one or more of individual non-transitory storage media of multiple non-transitory computer-readable storage media lack all of the code while multiple non-transitory computer-readable storage media collectively store all of the code. In at least one embodiment, executable instructions are executed such that different instructions are executed by different processors.

Accordingly, in at least one embodiment, computer systems are configured to implement one or more services that singly or collectively perform operations of processes described herein and such computer systems are configured with applicable hardware and/or software that enable the performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of the disclosure and does not pose a limitation on the scope of the disclosure unless otherwise claimed. No language in the specification should be construed as indicating any non-claimed element as essential to the practice of the disclosure.

In description and claims, terms "coupled" and "connected," along with their derivatives, may be used. It should be understood that these terms may not be intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, the term "processor" may refer to any device or portion of a device that processes electronic data from registers and/or memory and transform that electronic data into other electronic data that may be stored in registers and/or memory. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously, or intermittently. In at least one embodiment, terms "system" and "method" are used herein interchangeably insofar as the system may embody one or more methods and methods may be considered a system.

In the present document, references may be made to obtaining, acquiring, receiving, or inputting analog or digital data into a subsystem, computer system, or computer-implemented machine. In at least one embodiment, the process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or inter-process communication mechanism.

Although descriptions herein set forth example embodiments of described techniques, other architectures may be used to implement described functionality, and are intended to be within the scope of this disclosure. Furthermore, although specific distributions of responsibilities may be defined above for purposes of description, various functions and responsibilities might be distributed and divided in different ways, depending on circumstances.

Furthermore, although the subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system, comprising:
   a first circuit board comprising one or more first computing circuits; and
   an interconnect device coupled with the one or more first computing circuits, wherein the interconnect device comprises:
      a linear re-driver configured to:
      receive a first electrical input signal from at least one of the one or more first computing circuits;
      boost the first electrical input signal to form a boosted electrical signal; and
      output the boosted electrical signal, wherein the interconnect device is configured to provide the boosted electrical signal to one or more second computing circuits of a second circuit board over one or more wired connections, and wherein the boost to the first electrical input signal compensates for a known loss associated with the one or more wired connections.
Clause 2. The system of clause 1, further comprising:
   an optical transceiver coupled with the one or more first computing circuits, wherein the optical transceiver is configured to:
   receive a second electrical input signal from at least one of the one or more first computing circuits;
   generate an optical signal indicative of the second electrical input signal; and
   provide the optical signal to at least one of the one or more second computing circuits of the second circuit board or one or more third computing circuits of a third circuit board.
Clause 3. The system of clause 1, wherein the linear re-driver is integrated into a cable end of the interconnect device coupled to the one or more first computing circuits via a port on the first circuit board.
Clause 4. The system of clause 1, wherein the linear re-driver is integrated into a module coupled on the first circuit board.
Clause 5. The system of clause 4, wherein the module is disposed mid-board on the first circuit board.
Clause 6. The system of clause 1, wherein the interconnect device is configured to provide the boosted electrical signal to the one or more second computing circuits by a copper-based interconnect cable.
Clause 7. The system of clause 1, wherein the one or more computing circuits comprise a plurality of switches configured to direct electrical signals.
Clause 8. The system of clause 1, wherein the boosted electrical signal degrades during transit to the one or more second computing circuits, and wherein a degraded electrical signal received by the one or more second computing circuits corresponds to the first electrical input signal.
Clause 9. The system of clause 1, wherein the interconnect device is configured to operate between approximately 100 Gigabytes per second per lane and approximately 200 Gigabytes per second per lane.
Clause 10. The system of clause 1, wherein the first electrical input signal forms at least part of a differential pair signal.
Clause 11. The system of clause 1, wherein the interconnect device further comprises:
   at least one connection configured to receive electrical signals from the one or more second computing circuits.
Clause 12. The system of clause 1, wherein the system comprises a flexible design configured to output one or more boosted electrical signals using a combination of at least one of a pluggable transceiver or a mid-board active copper (MBAC) solution.
Clause 13. An interconnect device, comprising:
   a linear re-driver configured to:
   receive a first electrical input signal from at least one first computing circuit;
   boost the first electrical input signal to form a boosted electrical signal; and
   output the boosted electrical signal, wherein the interconnect device is configured to provide the boosted electrical signal to one or more second computing circuits over one or more wired connections, and wherein the boost to the first electrical input signal compensates for a known loss associated with the one or more wired connections.
Clause 14. The interconnect device of clause 13, further comprising:
   a cable end configured to couple to the at least one first computing circuit via a port on a circuit board associated with the at least one first computing circuit.
Clause 15. The interconnect device of clause 13, wherein the interconnect device is configured to provide the boosted electrical signal to the one or more second computing circuits by a copper-based interconnect cable.
Clause 16. The interconnect device of clause 13, wherein the boosted electrical signal degrades during transit to the one or more second computing circuits, and wherein a degraded electrical signal received by the one or more second computing circuits corresponds to the first electrical input signal.
Clause 17. The interconnect device of clause 13, wherein the interconnect device is configured to operate between approximately 100 Gigabytes per second per lane and approximately 200 Gigabytes per second per lane.
Clause 18. The interconnect device of clause 13, wherein the first electrical input signal forms at least part of a differential pair signal.
Clause 19. The interconnect device of clause 13, further comprising:
   at least one connection configured to receive electrical signals from the one or more second computing circuits.
Clause 20. A datacenter, comprising:
   a first circuit board comprising one or more first computing circuits;
   a second circuit board comprising one or more second computing circuits; and
   an interconnect device coupled between the one or more first computing circuits and the one or more second computing circuits; wherein the interconnect device comprises:
      a linear re-driver configured to:
      receive a first electrical input signal from at least one of the one or more first computing circuits;
      boost the first electrical input signal to form a boosted electrical signal; and
      output the boosted electrical signal, wherein the interconnect device is configured to provide the boosted electrical signal to the one or more second computing circuits over one or more wired connections, and wherein the boost to the first electrical input signal compensates for a known loss associated with the one or more wired connections.
Clause 21. The datacenter of clause 20, further comprising:
   an optical transceiver coupled with the one or more first computing circuits, wherein the optical transceiver is configured to:
   receive a second electrical input signal from at least one of the one or more first computing circuits;
   generate an optical signal indicative of the second electrical input signal; and
   provide the optical signal to at least one of the one or more second computing circuits of the second circuit board or one or more third computing circuits of a third circuit board.
Clause 22. The datacenter of clause 20, wherein the linear re-driver is integrated into one of:
   a cable end of the interconnect device coupled to the one or more first computing circuits via a port on the first circuit board; or
   an active module coupled on the first circuit board.
Clause 23. The datacenter of clause 20, wherein the one or more wired connections comprises a copper-based interconnect cable.
Clause 24. The datacenter of clause 20, wherein the boosted electrical signal degrades during transit to the one or more second computing circuits, and wherein a degraded electrical signal received by the one or more second computing circuits corresponds to the first electrical input signal.
Clause 25. The datacenter of clause 20, wherein the interconnect device is configured to operate between approximately 100 Gigabytes per second per lane and approximately 200 Gigabytes per second per lane.
Clause 26. The datacenter of clause 20, wherein the first electrical input signal forms at least part of a differential pair signal.
Clause 27. The datacenter of clause 20, wherein the interconnect device further comprises: at least one connection configured to receive electrical signals from the one or more second computing circuits.

## Claims

1. A system, comprising:
a first circuit board comprising one or more first computing circuits; and
an interconnect device coupled with the one or more first computing circuits, wherein the interconnect device comprises:
a linear re-driver configured to:
receive a first electrical input signal from at least one of the one or more first computing circuits;
boost the first electrical input signal to form a boosted electrical signal; and
output the boosted electrical signal, wherein the interconnect device is configured to provide the boosted electrical signal to one or more second computing circuits of a second circuit board over one or more wired connections, and wherein the boost to the first electrical input signal compensates for a known loss associated with the one or more wired connections.

2. The system of claim 1, further comprising:
an optical transceiver coupled with the one or more first computing circuits, wherein the optical transceiver is configured to:
receive a second electrical input signal from at least one of the one or more first computing circuits;
generate an optical signal indicative of the second electrical input signal; and
provide the optical signal to at least one of the one or more second computing circuits of the second circuit board or one or more third computing circuits of a third circuit board.

3. The system of claim 1 or 2, wherein the linear re-driver is integrated into a cable end of the interconnect device coupled to the one or more first computing circuits via a port on the first circuit board.

4. The system of claim 1 or 2, wherein the linear re-driver is integrated into a module coupled on the first circuit board.

5. The system of claim 4, wherein the module is disposed mid-board on the first circuit board.

6. The system of any preceding claim, wherein the interconnect device is configured to provide the boosted electrical signal to the one or more second computing circuits by a copper-based interconnect cable.

7. The system of any preceding claim, wherein the one or more computing circuits comprise a plurality of switches configured to direct electrical signals.

8. The system of any preceding claim, wherein the boosted electrical signal degrades during transit to the one or more second computing circuits, and wherein a degraded electrical signal received by the one or more second computing circuits corresponds to the first electrical input signal.

9. The system of any preceding claim, wherein the interconnect device is configured to operate between approximately 100 Gigabytes per second per lane and approximately 200 Gigabytes per second per lane.

10. The system of any preceding claim, wherein the first electrical input signal forms at least part of a differential pair signal.

11. The system of any preceding claim, wherein the interconnect device further comprises:
at least one connection configured to receive electrical signals from the one or more second computing circuits.

12. The system of any preceding claim, wherein the system comprises a flexible design configured to output one or more boosted electrical signals using a combination of at least one of a pluggable transceiver or a mid-board active copper (MBAC) solution.

13. An interconnect device, comprising:
a linear re-driver configured to:
receive a first electrical input signal from at least one first computing circuit;
boost the first electrical input signal to form a boosted electrical signal; and
output the boosted electrical signal, wherein the interconnect device is configured to provide the boosted electrical signal to one or more second computing circuits over one or more wired connections, and wherein the boost to the first electrical input signal compensates for a known loss associated with the one or more wired connections.

14. The interconnect device of claim 13, further comprising:
a cable end configured to couple to the at least one first computing circuit via a port on a circuit board associated with the at least one first computing circuit.

15. A datacenter, comprising:
a first circuit board comprising one or more first computing circuits;
a second circuit board comprising one or more second computing circuits; and
an interconnect device coupled between the one or more first computing circuits and the one or more second computing circuits; wherein the interconnect device comprises:
a linear re-driver configured to:
receive a first electrical input signal from at least one of the one or more first computing circuits;
boost the first electrical input signal to form a boosted electrical signal; and
output the boosted electrical signal, wherein the interconnect device is configured to provide the boosted electrical signal to the one or more second computing circuits over one or more wired connections, and wherein the boost to the first electrical input signal compensates for a known loss associated with the one or more wired connections.
